Europäisches Patentamt

European Patent Office

Office européen des brevets

(19)

(11) Veröffentlichungsnummer : **0 342 154 B1**

# EUROPÄISCHE PATENTSCHRIFT

(12)

(45) Veröffentlichungstag der Patentschrift :
**02.01.92 Patentblatt 92/01**

(51) Int. Cl.$^5$ : **G01N 7/10**

(21) Anmeldenummer : **89810323.9**

(22) Anmeldetag : **28.04.89**

(54) **Vorrichtung zum Messen der Wasserstoffkonzentration in einer Aluminiumschmelze.**

(30) Priorität : **10.05.88 CH 1774/88**

(43) Veröffentlichungstag der Anmeldung :
**15.11.89 Patentblatt 89/46**

(45) Bekanntmachung des Hinweises auf die
Patenterteilung :
**02.01.92 Patentblatt 92/01**

(84) Benannte Vertragsstaaten :
**AT CH DE FR GB GR IT LI**

(56) Entgegenhaltungen :
**GB-A- 684 865**
**US-A- 3 731 523**
**US-A- 3 977 232**
**US-A- 4 092 844**
**US-A- 4 331 023**
**US-A- 4 624 128**

(73) Patentinhaber : **ALUSUISSE-LONZA
SERVICES AG
Feldeggstrasse 4
CH-8034 Zürich (CH)**

(72) Erfinder : **Roggen, Rolf
Schlossgasse 29
CH-1950 Sion (CH)**

EP 0 342 154 B1

Jouve, 18, rue Saint-Denis, 75001 PARIS

**Beschreibung**

Die Erfindung betrifft eine Vorrichtung zum Messen der Wasserstoffkonzentration in einer Aluminiumschmelze, mit einem wasserstoffdurchlässigen Tauchkörper aus schmelzeresistentem, gesintertem oder gebranntem keramischen Werkstoff, welcher über ein eingepasstes Kapillarrohr aus wasserstoffundurchlässigem und schmelzeresistentem Werkstoff vakuumdicht mit einer in einem Messkopf angeordneten Druckmesszelle in Verbindung steht. Bei Aluminium und Aluminiumlegierungen bestehen, abhängig von Aggregatzustand und Temperatur, grosse Unterschiede hinsichtlich der Löslichkeit von Wasserstoff. Aluminiumschmelzen nehmen Wasserstoff aus Ofengasen, Luftfeuchtigkeit und Auskleidungsmaterial begierig auf. Mit Legierungszusätzen wie z.B. Magnesium werden zusätzlich zum gelösten Wasserstoff noch Hydride und Hydratverbindungen eingeschleppt, die den Wasserstoffgehalt der Schmelze erhöhen. Die Löslichkeit des Wasserstoffes nimmt bei der Erstarrung schlagartig von ca. 0,8 auf 0,04 cm³ pro 100 g Metall ab. Der überschüssige Wasserstoff scheidet beim Erstarren in Form feinster Poren aus, die die mechanischen Eigenschaften des Fertigproduktes häufig beeinträchtigen.

Bei den steigenden Qualitätsanforderungen ist in den Giessereien eine kontinuierliche Wasserstoffüberwachung der Schmelze unentbehrlich. Eine solche Ueberwachung wird sinnvoll eingesetzt zur Kontrolle der Metallqualität vor der Giessmaschine, zur Kontrolle der Effizienz von Metallbehandlungen (Entgasen, Abscheidung von Fremdelementen mit Aktivgasen) und letztlich zur Prüfung vom Isolierungsmaterial auf die Wasserfreigabe.

Gegenwärtig werden nachstehend erwähnte $H_2$-Messverfahren mit unterschiedlichem Erfolg eingesetzt. Diese Messverfahren benutzen das Sievertsche Gesetz, das im Gleichgewicht die $H_2$-Konzentration der Schmelze mit dem $H_2$-Partialdruck einer Gasblase und der Badtemperatur entsprechend nachstehender Gleichung verknüpft :

$$C = k_1 \cdot \sqrt{p} \cdot e^{-k2/T}$$

$C =$ $H_2$-Konzentration der Schmelze (cm³/100g Schmelze)
$p =$ $H_2$-Gleichgewichtsdruck (mbar)
$T =$ Absoluttemperatur der Schmelze (°K)
$k_1, k_2 =$ Konstanten

Bei einem bekannten Verfahren wird eine Kreislaufströmung von Stickstoff in die Schmelze geleitet. Im Sättigungsgleichgewicht wird die Wasserstoffkonzentration über eine Wärmeleitfähigkeitszelle gemessen. Die hohen Kosten der störanfälligen Sonden und das erforderliche geschulte Personal beschränken den Einsatz des Gerätes im rauhen Betrieb.

Weiter ist bekannt, eine Schmelzeprobe bei sinkendem Druck in einer durchsichtigen Vakuumkammer zu beobachten. Wird der Druck kleiner als der Wasserstoffgleichgewichtsdruck der Schmelze, so bilden sich unter der Oxydhaut Blasen. Das Gerät ist betriebstauglich. Die Bestimmung ist jedoch subjektiv. Das Messverfahren kann bei kleiner $H_2$-Konzentration ($\leq 0,10$ cm³/100 g) nicht mehr eingesetzt werden.

Bei einer weiter bekannten Heissextraktion werden mechanisch sorgfältig vorbereitete Proben entweder im festen Zustand bei 500 bis 600°C oder nach Aufschmelzen im Vakuum in einem Inertgasstrom entgast und der Wasserstoffanteil gemessen. Das Verfahren ist aufwendig und kann nur unter Laborverhältnissen durchgeführt werden. Bei magnesiumhaltigen Legierungen scheidet das Verfahren wegen Gettereffekten, Hydrid- und Hydratzersetzung aus.

Bei einem weiteren bekannten Verfahren wird in die Schmelze ein wasserstoffdurchlässiger, aber schmelzeundurchlässiger Tauchkörper aus Graphit eingetaucht, der über ein Kapillarrohr mit einer Druckmesszelle kommuniziert. Fremdgase werden vorerst mittels einer Vakuumpumpe evakuiert. Der in der Schmelze gelöste atomare Wasserstoff rekombiniert an der Graphitwand analog wie bei einer Gasblase zum Wasserstoffmolekül und diffundiert in den Hohlkörper. Aus dem Gleichgewichtsdruck des Wasserstoffes und der Badtemperatur wird unmittelbar nach der Sievertschen Gleichung die Wasserstoffkonzentration in der Schmelze berechnet.

Angesichts dieser Gegebenheiten hat sich der Erfinder das Ziel gesetzt, eine Vorrichtung der eingangs erwähnten Art zu schaffen, deren Messonde robust und leicht austauschbar ist sowie eine kleinstmögliche Ansprechzeit aufweist.

Erfindungsgemäss wird die Aufgabe gelöst durch die in Anspruch 1 gekennzeichneten Merkmale. Weitere bevorzugte Merkmale der Erfindung ergeben sich aus den Unteransprüchen.

Im wesentlichen besteht die Vorrichtung aus einem wasserstoffdurchlässigen, schmelzeundurchlässigen Tauchkörper, einem Kapillarrohr mit integriertem Thermoelement, einem Schutzrohr und einer Steckverbindung. Die Formgestaltung des Tauchkörpers erlaubt eine grösstmögliche Austauschfläche mit dem Schmelzestrom bei einem geringstmöglichen Gasvolumen in Verbindung mit der Druckmesszelle. Die Ausmasse der Sonde entsprechen etwa der halben Kanalbreite der in den Giessereien üblichen Rinnensysteme.

Der H$_2$-durchlässige Tauchkörper ist mindestens zweiteilig gestaltet. Der oberste Teil (Diffusionsmembran) ist über das Kapillarrohr mit der Druckmesszelle im Messkopf verbunden. Der unterste Teil (Diffusionsmembran) ist im einfachsten Fall scheibenförmig gestaltet und liegt satt im oberen Teil. Die Dichtung an den Verbindungsstellen der beiden Teile sowie des obersten Teils mit dem Kapillarrohr erfolgt durch die Badschmelze. Der Tauchkörper besteht aus einem hitzebeständigen Werkstoff, der mit der Schmelze nicht reagiert. Die Porosität der Membranen ist genügend, um einen H$_2$-Austausch Schmelze/Kapillarrohr ohne Eindringen von Schmelze zu ermöglichen. Vorzugsweise können gesinterte oder gebrannte keramische Werkstoffe eingesetzt werden, die von der Schmelze nicht benetzt werden, wie Graphit, Bornitrid, Siliziumnitrid, Tonerde bzw. Aluminiumoxyd usw.

Das Kapillarrohr besteht aus einem wasserstoffundurchlässigen, mit der Schmelze nicht reagierenden Werkstoff. Vorzugsweise können hochdichte Tonerde- bzw. Aluminiumoxydrohre eingesetzt werden. Metallische Kapillarrohre mit Schutzschichten wie z.B. mit Al$_2$O$_3$-plasmabeschichtete Stahl- oder Nickelrohre, können ebenfalls eingesetzt werden. Der Aussendurchmesser soll möglichst klein gehalten werden, um den Wärmefluss nach der Halterungsvorrichtung zu minimieren. Weiter kann beim Eintauchen der Sonde die eingeschleppte Oxydhaut der Schmelze undichte Stellen auf der Rohroberfläche aufweisen. Diese Undichtigkeitsstellen sind proportional zum Rohrdurchmesser und würden bei grösserem Durchmesser die Messwerte verfälschen.

Das Thermoelement ist vorzugsweise ein Ni-Cr-Mantelelement und ragt, vom Kapillarrohr ummantelt, in den Tauchkörper ein.

Die Verbindung der Sonde mit dem Messkopf erfolgt über ein Verbindungsglied. Dabei sind die Kapillarverbindung und die elektrischen Anschlüsse als vakuumdichter Stecker bzw. Schraubverbindung gestaltet. Das Gesamtvolumen der Gassäule (Totvolumen des Messgerätes) soll kleiner als 1 cm$^3$ sein, um eine Ansprechzeit von einigen Minuten zu gewährleisten.

Der in der Schmelze gleichmässig verteilte oder an der Oberfläche eingeschlossener Oxydpartikel angereicherte Wasserstoff scheidet sich an der Oberfläche des Tauchkörpers ab. Dieser Vorgang erfolgt in verschiedenen reversiblen Schritten :

1) Durch Konvektion oder Uebergiessen strömt frische Schmelze am Tauchkörper vorbei. Der Wasserstoff liegt vorwiegend in Lösung vor (als Proton und freies Elektron).

2) Uebergang des Wasserstoffs aus dem Lösungszustand und Adsorption des Atoms auf der Oberfläche des Tauchkörpers.

3) Desorption und Rekombination der Atome zu H$_2$-Molekülen.

4) Diffusion durch den wasserstoffdurchlässigen Tauchkörper.

5) Anreicherung und Druckaufbau in der vorerst sorgfältig evakuierten Messonde. Das Gas strömt dabei durch die Verbindungsfläche des mindestens zweiteiligen Eintauchkörpers über das Kapillarrohr und die Steckverbindung zum Druckmessgerät. Im Gleichgewicht ist der Wasserstoffdruck im Tauchkörper eine Funktion (Sievert'sches Gesetz) der H$_2$-Konzentration der Schmelze und dessen Temperatur. Die Ansprechzeit der Sonde ergibt sich durch das Verhältnis der Diffusionsgeschwindigkeit zum Totvolumen der Messonde.

Um die Messung bei grossen Totvolumen doch in annehmbaren Zeiten durchführen zu können, kann im Messkopf zusätzlich zum Evakuierventil noch eine Wasserstoffeinspeisung vorgesehen sein. Entsprechend den Druckänderungen können mittels eines Prozessrechners gesteuerte PID-Regler kurzfristig H$_2$ zur Messonde zu- bzw. abdosieren.

Die quasi gleichzeitige und gleichortige Druck- und Temperaturbestimmung der untersuchten Schmelze sichern eine genaue Berechnung der Wasserstoffkonzentration der Schmelze ab. Die einfache äussere Formgestaltung des Tauchkörpers erleichtert bei der Wiederbenützung der Sonde das Entfernen der Hydroxydanhaftungen, die unter Umständen eine grössere Wasserstoffkonzentration vortäuschen können. Die Vorrichtung erlaubt ein schnelles und sicheres Auswechseln der Messonde in den rauhen Umwelt- und Betriebsbedingungen der Giessereien. Die Anordnung gewährleistet ein langzeitiges Einsetzen der Sonde ohne Fehlmessung.

Weitere Vorteile und Einzelheiten der Erfindung ergeben sich aus der nachfolgenden Betrachtung bevorzugter Ausführungsbeispiele sowie anhand der Zeichnung ; die Längsschnitte zeigen in

Fig. 1    eine erfindungsgemässe Vorrichtung mit einem Tauchkörper,
Fig. 2    eine weitere Ausgestaltung eines Tauchkörpers, und
Fig. 3    einen durch einen Tiegel geschützten Tauchkörper.

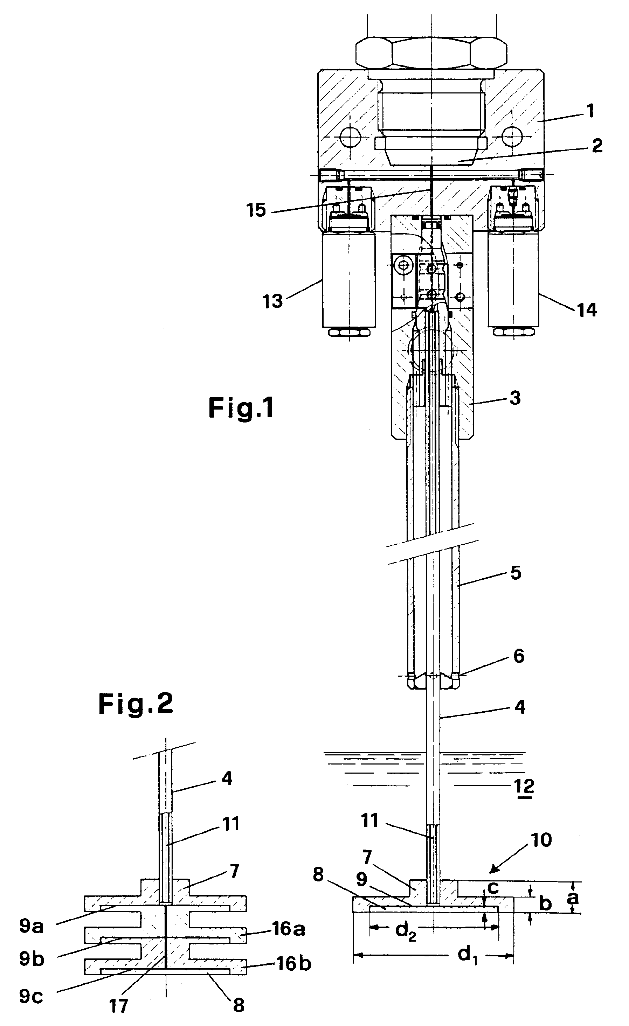

Eine Vorrichtung zum Messen der Wasserstoffkonzentration in einer Aluminiumschmelze weist gemäss Fig. 1 an einem Messkopf 1 eine Druckmesszelle 2 mit frontbündiger Membran auf. Der Messkopf 1 ist über einen Schnellverschluss 3 vakuumdicht mit einem Kapillarrohr 4 aus hochdichter Tonerde mit einem Aussendurchmesser von beispielsweise 4 mm verbunden. Das Kapillarrohr 4 ist von einem pressluftgekühlten Schutzrohr 5 umgeben, welches an dessen unterem Ende verstrebt ist und Luftaustrittslöcher 6 aufweist. Das freie Ende des Kapillarrohres steckt in einer glockenförmigen ersten Diffusionsmembran 7 aus Graphit, in welche eine zweite scheibenförmige Diffusionsmembran 8 unter Bildung einer gemeinsamen Grenzfläche 9 eingepasst ist. Die Diffusionsmembranen 7,8 bilden hierbei den Tauchkörper 10. Typische Abmessungen des Tauchkörpers 10 sind a = 10 mm ; b = 5 mm ; c = 2 mm ; $d_1$ = 50 mm ; $d_2$ = 40 mm. Innerhalb des Kapillarrohres 4 und mit diesem bündig befindet sich ein Ni-Cr-Mantelthermoelement 11 mit einem Durchmesser von beispielsweise 1,5 mm. Das mit dem Kapillarrohr 4 ummantelte Thermoelement 11 ragt in die erste Diffusionsmembran 7. Das Kapillarrohr 4 mit aufgesetztem Tauchkörper 10 ist in eine Aluminiumschmelze 12 eingetaucht.

Am Messkopf 1 sind ein Vakuumventil 13 sowie ein Wasserstoff-Dotierungsventil 14 angeschlossen. Druckmesszelle 2, Vakuumventil 13, Wasserstoff-Dotierungsventil 14 und Kapillarrohr 4 sind über einen Verbindungskanal 15 untereinander verbunden.

Fig. 2 zeigt den Detailaufbau einer anderen Variante des Tauchkörpers 10. Die Diffusionsmembranen sind dabei zellenartig gestapelt, wobei zwischen der ersten und der letzten Membran 7,8 zwei Zwischenglieder 16a, b unter Bildung der Grenzflächen 9a, b, c eingepasst sind. Die Grenzflächen 9a, b, c sind über eine Bohrung 17 als Wasserstoffsammelkanal untereinander und mit dem Kapillarrohr 4 verbunden. Die Austauschfläche mit der Schmelze kann mit dieser Anordnung entsprechend der Anzahl Zwischenglieder 16 ohne wesentliche Vergrösserung des Totvolumens beliebig gross gewählt werden.

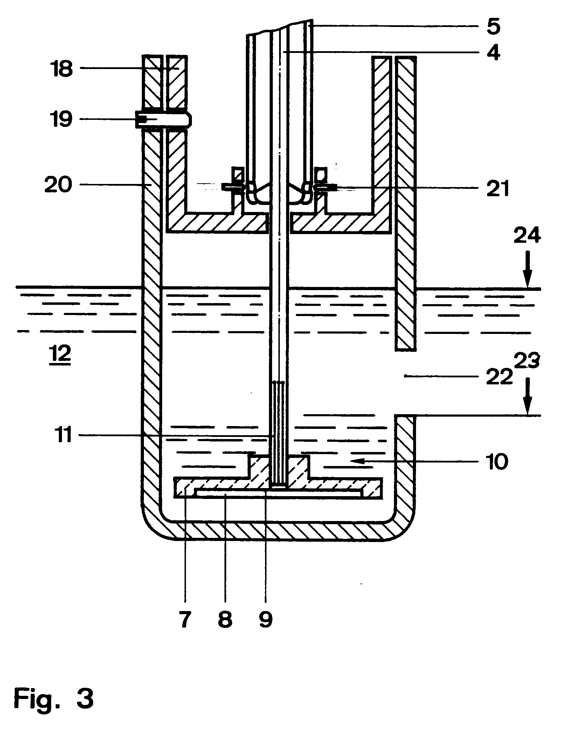

Fig. 3 zeigt eine Variante des unteren Teils von Fig. 1. Der Tauchkörper 10, ist in einem in die Schmelze 12 eingetauchten Tiegel 20 aus z.B. Aluminiumoxyd angeordnet. Im unteren Bereich, oberhalb des Tauchkörpers 10 weist der Tiegel 20 wenigstens eine Oeffnung 22 auf, welche einen verhältnismässig grossen Durchmesser hat. Zweckmässig sind drei um 120° versetzte Oeffnungen 22 aus der Tiegelwand ausgespart.

Der Tiegel 20 ist über eine becherförmige Halterung 18 aus beispielsweise hitzebeständigem Stahl am Schutzrohr 5 aufgehängt. Die Befestigung erfolgt mit an sich bekannten mechanischen Mitteln, wie Schrauben 19, 21, Bolzen, Dübeln, Aussen- und Innengewinde, oder Bajonettverschluss.

Beim Eintauchen des Tiegels 20 in die Schmelze 12 strömt diese durch die Oeffnungen 22 in den Tiegelinnenraum und stellt sich auf ein erstes, der Schmelzeoberfläche ausserhalb des Tiegels 20 entsprechendes Niveau 24 ein. Die Wasserstoffkonzentration der Schmelze 12 gleicht sich über die vollständig eingetauchten Oeffnungen 22 aus. Nach der Messung wird die Vorrichtung aus der Schmelze 12 gehoben. Dabei entleert sich der Tiegel 20 über die Oeffnungen 22 auf ein tieferes zweites Niveau 23, welches durch die Anordnung der Oeffnungen 22 bestimmt ist. Der Tauchkörper 10 ist immer durch die im Tiegel 20 verbleibende Restschmelze luftdicht geschützt. Wenn die Messvorrichtung ausser Betrieb ist, kann sie bis auf die Höhe des Tiegels 20 in einen vertikalen Warmhalteofen eingebracht werden und ist jederzeit für eine nächste Messung bereit.

Diese Tiegelvariante ist besonders vorteilhaft, weil die Einsatzzeit nochmals verkürzt und eine Lebensdauer von mehreren Monaten erreicht werden kann. Weiter kann vermieden werden, dass auf der Oberfläche des Tauchkörpers 10 Hydroxydphasen, welche auf den abgekühlten, der Luft ausgesetzten Aluminiumanhaftungen entstehen, in der Schmelze entgasen und die Messergebnisse verfälschen.

## Patentansprüche

1. Vorrichtung zum Messen der Wasserstoffkonzentration in einer Aluminiumschmelze, mit einem wasserstoffdurchlässigen Tauchkörper (10) aus schmelzeresistentem, gesintertem oder gebranntem keramischem Werkstoff, welcher über ein eingepasstes Kapillarrohr (4) aus wasserstoffundurchlässigem und schmelzeresistentem Werkstoff vakuumdicht mit einer in einem Messkopf (1) angeordneten Druckmesszelle (22) in Verbindung steht, dadurch gekennzeichnet, dass der Tauchkörper (10) aus mindestens zwei jeweils eine gemeinsame Grenzfläche (9) aufweisenden, im wesentlichen plattenförmigen Diffusionsmembranen (7,8) besteht, wobei das Kapillarrohr (4) mit der/den Grenzfläche/n (9) frei kommuniziert.

2. Vorrichtung nach Anspruch 1, dadurch gekennzeichnet, dass die das Kapillarrohr (4) aufnehmende erste Diffusionsmembran (7) eine Aussparung aufweist, in welcher die zweite Diffusionsmembran (8) eingepasst ist.

3. Vorrichtung nach Anspruch 2, dadurch gekennzeichnet, dass bei mehrteiliger Ausführung des Tauchkörpers (10) wenigstens ein Zwischenglied (16a, b) eingesetzt ist, dessen/deren eine Seite jeweils eine Aussparung zur Aufnahme des nächstfolgenden Zwischengliedes aufweist, wobei die jeweilige/n Grenzfläche/n (9a, b, c) über eine Bohrung (17) untereinander und mit dem Kapillarrohr (4) verbunden ist/sind.

4. Vorrichtung nach einem der Ansprüche 1 bis 3, dadurch gekennzeichnet, dass in dem Tauchkörper (10)

4

zugewandten Ende des Kapillarrohres (4) ein vorzugsweise mit diesem bündiges Thermoelement (11) eingesetzt ist.

5. Vorrichtung nach einem der Ansprüche 1 bis 4, dadurch gekennzeichnet, dass der Tauchkörper (10) in einem am Messkopf (1) aufgehängten Tiegel (20) angeordnet ist, welcher oberhalb des Tauchkörpers (10) wenigstens eine seitliche, vollständig in die Schmelze (12) eingetauchte Oeffnung (22) aufweist.

6. Vorrichtung nach Anspruch 5, dadurch gekennzeichnet, dass der Tiegel (20) über eine vorzugsweise becherförmige Halterung (18) an einem am Messkopf (1) befestigten Schutzrohr (5) für das Kapillarrohr (4) aufgehängt ist.

7. Vorrichtung nach einem der Ansprüche 1 bis 6, dadurch gekennzeichnet, dass das Totvolumen des Messgerätes, entsprechend dem Gesamtvolumen der Gassäule, kleiner als 1 cm³ ist.

8. Vorrichtung nach einem der Ansprüche 1 bis 7, dadurch gekennzeichnet, dass im Messkopf (1) zusätzlich zu einem Vakuumventil ein Wasserstoff-Dosierungsventil (14) vorgesehen ist, welches kurzfristig Wasserstoff zur Messonde zu- bzw. abdosiert.

9. Vorrichtung nach einem der Ansprüche 1 bis 8, dadurch gekennzeichnet, dass der Tauchkörper (10) und der Tiegel (20) aus Graphit, Bornitrid, Siliziumnitrid oder Aluminiumoxid bestehen.

10. Vorrichtung nach einem der Ansprüche 1 bis 9, dadurch gekennzeichnet, dass das Kapillarrohr (4) aus Aluminiumoxid hoher Dichte besteht.

**Claims**

1. Device for measuring the hydrogen concentration in an aluminium melt, having a hydrogen-permeable immersion body (10) made from melt-resistant, sintered or fired ceramic material which is connected to a pressure measuring cell (22) arranged in a measuring head (1) in a vacuum-tight manner by means of a fitted capillary tube (4) made from hydrogen-impermeable and melt-resistant material, characterised in that the immersion body (10) comprises at least two essentially plate-like diffusion membranes (7, 8) each having a common interface (9), wherein the capillary tube (4) freely communicates with the interface(s) (9).

2. Device according to claim 1, characterised in that the first diffusion membrane (7) receiving the capillary tube (4) has a recess into which the second diffusion membrane (8) is fitted.

3. Device according to claim 2, characterised in that when the immersion body (10) has a multi-part design, at least one intermediate element (16a, b) is used, one side of which has a recess for receiving the next intermediate element in each case, wherein the particular interface(s) (9a, b, c) is/are connected to one another and to the capillary tube (4) by means of a bore (17).

4. Device according to one of claims 1 to 3, characterised in that a thermocouple (11) preferably flush with the capillary tube (4) is inserted in the end of the latter facing the immersion body (10).

5. Device according to one of claims 1 to 4, characterised in that the immersion body (10) is arranged in a crucible (20) suspended at the measuring head (1), which crucible (20) has at least one lateral opening (22) completely immersed in the melt (12) above the immersion body (10).

6. Device according to claim 5, characterised in that the crucible (20) is suspended on a protective tube (5) for the capillary tube (4) attached to the measuring head (1) by means of a preferably bowl-shaped mounting device (18).

7. Device according to one of claims 1 to 6, characterised in that the dead volume of the measuring apparatus, corresponding to the total volume of the gas column, is less than 1 cm³.

8. Device according to one of claims 1 to 7, characterised in that a hydrogen metering valve (14), which meters hydrogen briefly to or from the measuring probe, is provided in the measuring head (1) in addition to a vacuum valve.

9. Device according to one of claims 1 to 8, characterised in that the immersion body (10) and the crucible (20) consist of graphite, boron nitride, silicon nitride or aluminium oxide.

10. Device according to one of claims 1 to 9, characterised in that the capillary tube (4) consists of aluminium oxide of high density.

**Revendications**

1. Dispositif pour mesurer la concentration en hydrogène d'un bain d'aluminium, avec un corps à immersion (10) perméable à l'hydrogène, en un matériau céramique fritté ou calciné résistant au bain, qui communique avec une cellule manométrique (22) disposée dans une tête de mesure (1) par l'intermédiaire d'un tube capillaire (4) adapté en un matériau imperméable à l'hydrogène et résistant au bain, caractérisé en ce que le corps à immersion (10) consiste en au moins deux membranes de diffusion (7, 8) sensiblement en forme de plaques qui présentent chacune une surface limite (9) commune, le tube capillaire (4) communiquant librement avec la ou les surfaces limites (9).

2. Dispositif selon la revendication 1, caractérisé en ce que la première membrane de diffusion (7) qui reçoit le tube capillaire (4) présente un évidement dans lequel s'adapte la deuxième membrane de diffusion (8).

3. Dispositif selon la revendication 2, caractérisé en ce que, dans le cas d'un agencement en plusieurs parties du corps a immersion (10), on insère au moins un élément intermédiaire (16a, b) dont un côté présente un évidement pour recevoir l'élément intermédiaire suivant, la ou les surfaces limites (9a, b, c) étant reliées entre elles et avec le tube capillaire (4) par l'intermédiaire d'un alésage (17).

4. Dispositif selon l'une des revendications 1 à 3, caractérisé en ce que, dans l'extrémité du tube capillaire (4) qui est tournée vers le corps à immersion (10), est inséré un thermo-élément (11) qui est de préférence de niveau avec celui-ci.

5. Dispositif selon l'une des revendications 1 à 4, caractérisé en ce que le corps a immersion (10) est disposé dans un creuset (20), suspendu à la tête de mesure (1), qui présente au-dessus du corps à immersion (10) au moins une ouverture (22) latérale qui est totalement immergée dans le bain (12).

6. Dispositif selon la revendication 5, caractérisé en ce que le creuset (20) est suspendu, par l'intermédiaire d'un support (18) avantageusement en forme de gobelet, à un tube de protection (5) pour le tube capillaire (4), fixé sur la tête de mesure (1).

7. Dispositif selon l'une des revendications 1 a 6, caractérisé en ce que, selon le volume total de la colonne de gaz, le volume mort de l'appareil de mesure est inférieur à 1 cm³.

8. Dispositif selon l'une des revendications 1 à 7, caractérisé en ce qu'il est prévu dans la tête de mesure (1) en plus d'une vanne de mise sous vide une vanne de dosage d'hydrogène (14) qui envoie brièvement et de façon dosée de l'hydrogène à la sonde de mesure ou qui en retire.

9. Dispositif selon l'une des revendications 1 à 8, caractérisé en ce que le corps à immersion (10) et le creuset (20) consistent en graphite, en nitrure de bore, en nitrure de silicium ou en oxyde d'aluminium.

10. Dispositif selon l'une des revendications 1 à 9, caractérisé en ce que le tube capillaire (4) consiste en oxyde d'aluminium de densité élevée.

Fig.1

Fig.2

**Fig. 3**